# EUROPEAN PATENT APPLICATION

(11) **EP 2 543 899 A1**
(43) Date of publication of application: **09.01.2013**
(21) Application number: 11750739.2
(22) Date of filing: 03.03.2011
(51) Int. Cl.: F16C 33/14, F02F 7/00, F16C 9/02, F16C 17/04, F16C 33/06

(54) **THRUST BEARING SEGMENT, THRUST BEARING, AND INTERNAL COMBUSTION ENGINE**

(30) Priority: 03.03.2010 JP 2010046688
(71) Applicant: Mitsubishi Heavy Industries, Ltd., Tokyo 108-8215 (JP)
(72) Inventor: IMANAKA, Katsumi, Tokyo 108-8215 (JP); KUNIHIRO, Nobuyuki, Tokyo 108-8215 (JP)
(74) Representative: HOFFMANN EITLE
(86) International application number: PCT/JP2011/054872
(87) International publication number: WO 2011/108630

(57) **Abstract**

A thrust bearing segment that can improve the load-bearing ability of a thrust bearing is provided. A thrust pad (18) supports a thrust collar (17) while resisting a load in a rotation axis direction acting on the thrust collar (17) provided on the crankshaft (2) and has a recess circumferentially provided in at least one of an outer circumferential edge having an outer circumferential surface facing radially outward with respect to the rotation axis and an inner circumferential edge having an inner circumferential surface facing radially inward with respect to the rotation axis.

## Description

### {Technical Field}

The present invention relates to a thrust bearing segment used in, for example, a thrust bearing that constitutes a large marine diesel engine, to a thrust bearing, and to an internal combustion engine.

### {Background Art}

A thrust bearing that constitutes a large marine diesel engine and is disclosed in, for example, PTL 1 is known.

### {Citation List}

### {Patent Literature}

{PTL 1} The Publication of Japanese Patent No. 3689378 {Summary of Invention}

### {Technical Problem}

In the invention disclosed in PTL 1, a recess 28 having an arch shape in cross-sectional view is circumferentially provided in an outer circumferential edge of a thrust collar 14, thereby improving the load-bearing ability of a thrust bearing 7.
However, in the invention disclosed in PTL 1, the recess 28 needs to be uniformly machined out of a circumferential surface (outer circumferential surface) located on the radially outer side of the thrust collar 14 toward the radially inward side so that the cross-sectional shape thereof is uniform. Thus, in large marine diesel engines, the manufacturing processes of crankshafts and engines require a long time, leading to a problem of high engine manufacturing costs.

The present invention has been made in view of the above-described circumstances, and an object thereof is to provide a thrust bearing segment that can improve the load-bearing ability of a thrust bearing and to provide a thrust bearing and an internal combustion engine.

### {Solution to Problem}

To overcome the above-described problem, the present invention employs the following solutions.
A thrust bearing segment according to the present invention is a thrust bearing segment that supports a thrust collar while resisting a load in a rotation axis direction acting on the thrust collar provided on a crankshaft. The thrust bearing segment has a recess circumferentially provided in at least one of an outer circumferential edge having an outer circumferential surface facing radially outward with respect to the rotation axis and an inner circumferential edge having an inner circumferential surface facing radially inward with respect to the rotation axis.

In the thrust bearing segment according to the first aspect of the present invention, the recess is provided in the outer circumferential edge, and the recess is a circumferential groove having a U-shaped cross section in the radial direction.

In a thrust bearing segment according to a second aspect of the present invention, the recess is provided in the outer circumferential edge, and the recess is a step portion provided on a surface not in contact with the thrust collar and having an L-shaped cross section in the radial direction.

In the thrust bearing segment according to the first aspect or second aspect of the present invention, it is more preferable that the recess be provided in the inner circumferential edge, and the recess be a circumferential groove having a U-shaped cross section in the radial direction.

In the thrust bearing segment according to the first aspect or second aspect of the present invention, it is more preferable that the recess be provided in the inner circumferential edge, and the recess be a step portion provided on a surface not in contact with the thrust collar and having an L-shaped cross section in the radial direction.

In the thrust bearing segment according to a third aspect of the present invention, the recess is provided in the inner circumferential edge, and the recess is a circumferential groove having a U-shaped cross section in the radial direction.

In the thrust bearing segment according to a fourth aspect of the present invention, the recess is provided in the inner circumferential edge, and the recess is a step portion provided on a surface not in contact with the thrust collar and having an L-shaped cross section in the radial direction.

A thrust bearing of the present invention includes any one of the above-described thrust bearing segments.

Because the thrust bearing of the present invention achieves an improved load-bearing ability even when the size of the thrust bearing segment is the same as that of the conventional thrust bearing segment, it can be applied to a large internal combustion engine (for example, a diesel engine) having a larger output than a conventional internal combustion engine, without increasing the size.
On the other hand, when subjected to the same load as before, the thrust bearing segment may have a smaller size than the conventional thrust bearing segment. Thus, the size and weight of the thrust bearing can be reduced.

The internal combustion engine of the present invention has the above-described thrust bearing.

Because, in the internal combustion engine of the present invention, the thrust bearing segment may have a smaller size than the conventional thrust bearing segment when subjected to the same load as before, the size and weight of a main bearing housing and a bedplate, which support the thrust bearing segment, can be reduced.

### {Advantageous Effects of Invention}

The thrust bearing segment, the thrust bearing, and the internal combustion engine of the present invention achieve an advantage of providing improved load-bearing ability of the thrust bearing.

### {Brief Description of Drawings}

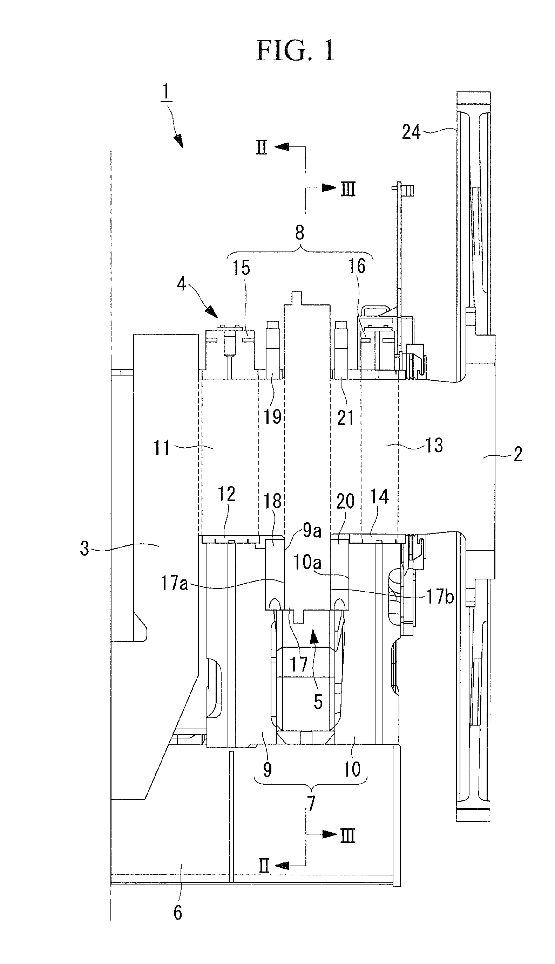

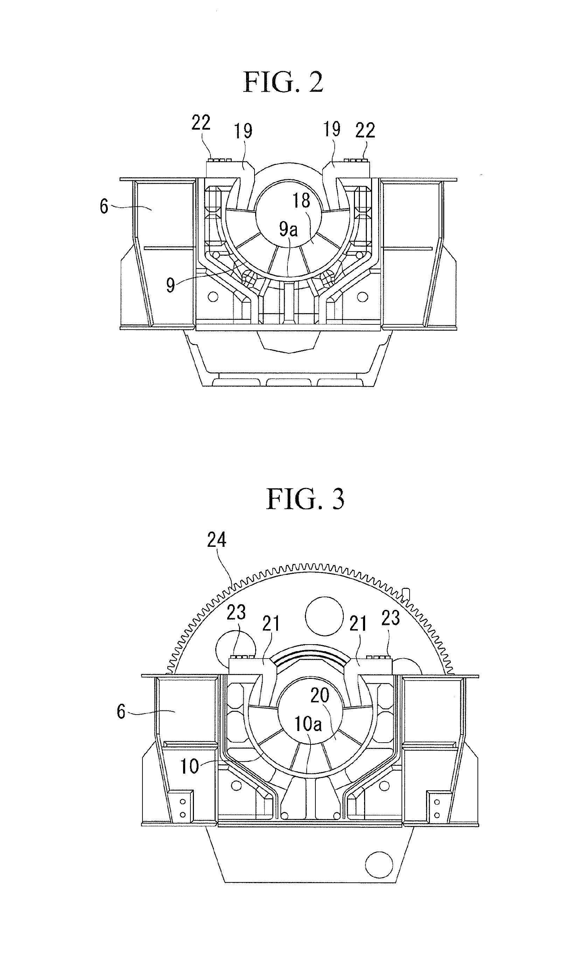

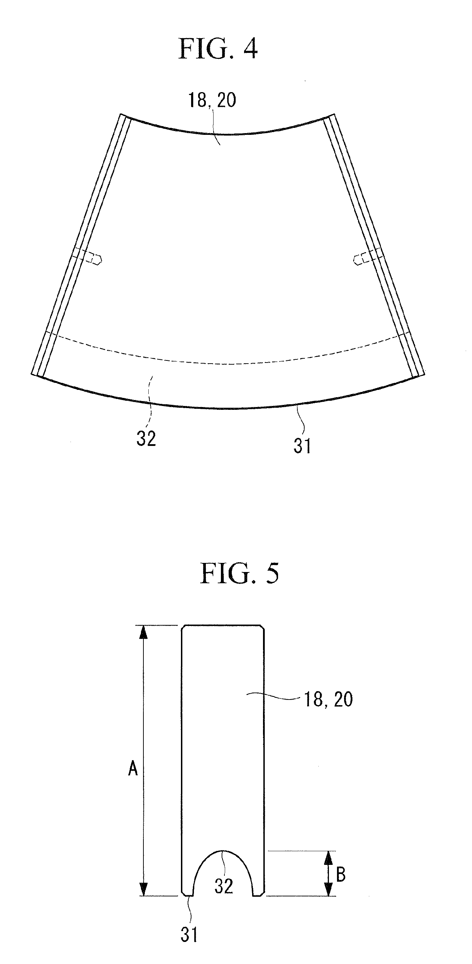

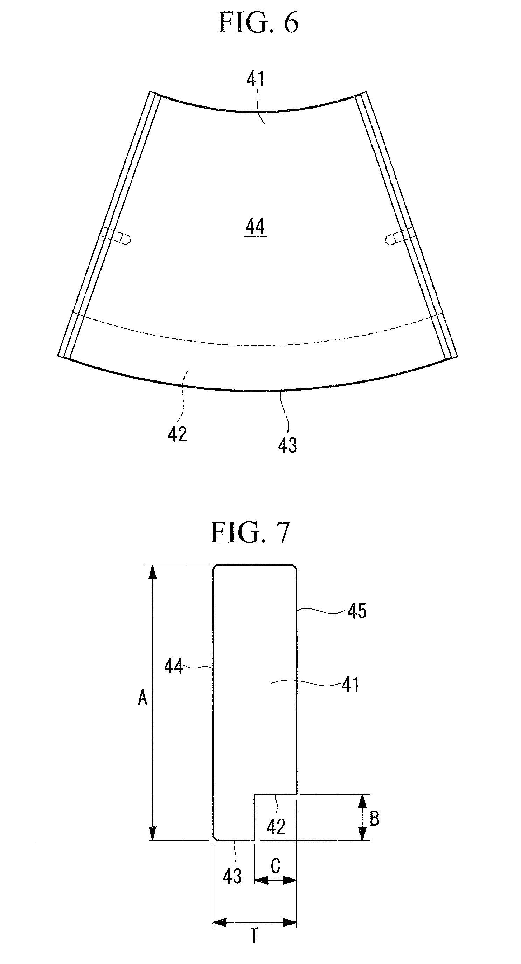

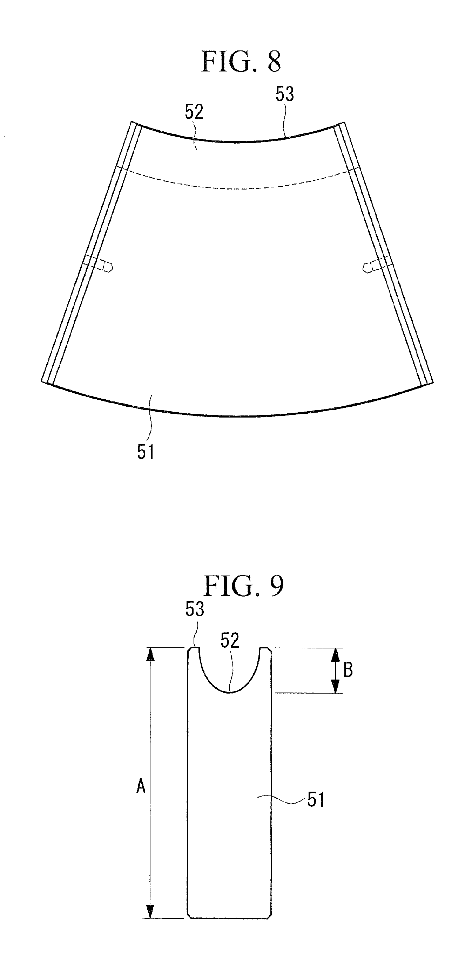

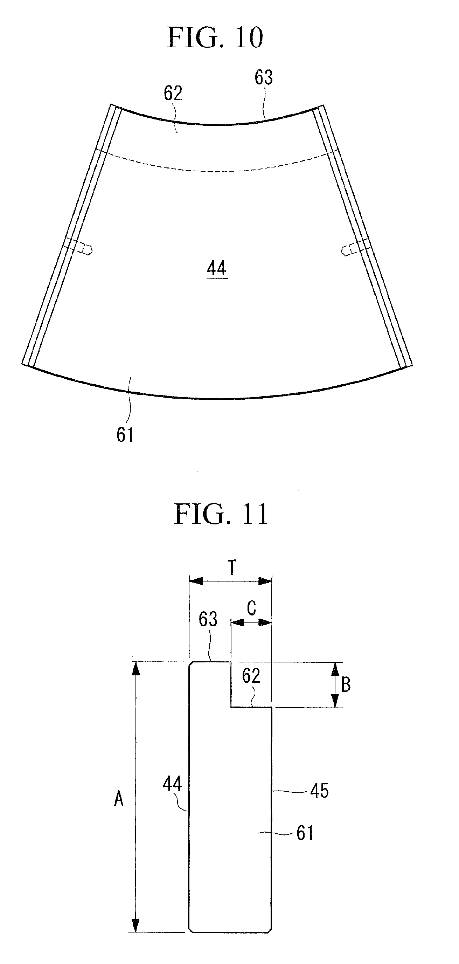

{FIG. 1} FIG. 1 is a cross-sectional view of the relevant part of an internal combustion engine having a thrust bearing segment according to a first embodiment of the present invention, viewed from the left.
{FIG. 2} FIG. 2 is a view taken along line II-II in FIG. 1.
{FIG. 3} FIG. 3 is a view taken along line III-III in FIG. 1.
{FIG. 4} FIG. 4 is a plan view of a thrust pad (thrust bearing segment) according to the first embodiment of the present invention.
{FIG. 5} FIG. 5 is a side view of the thrust pad (thrust bearing segment) according to the first embodiment of the present invention.
{FIG. 6} FIG. 6 is a plan view of a thrust pad (thrust bearing segment) according to a second embodiment of the present invention.
{FIG. 7} FIG. 7 is a side view of the thrust pad (thrust bearing segment) according to the second embodiment of the present invention.
{FIG. 8} FIG. 8 is a plan view of a thrust pad (thrust bearing segment) according to a third embodiment of the present invention.
{FIG. 9} FIG. 9 is a side view of the thrust pad (thrust bearing segment) according to the third embodiment of the present invention.
{FIG. 10} FIG. 10 is a plan view of a thrust pad (thrust bearing segment) according to a fourth embodiment of the present invention.
{FIG. 11} FIG. 11 is a side view of the thrust pad (thrust bearing segment) according to the fourth embodiment of the present invention.

### {Description of Embodiments}

### (First Embodiment)

A thrust bearing segment according to a first embodiment of the present invention will be described below with reference to FIGS. 1 to 5.
FIG. 1 is a cross-sectional view of the relevant part of an internal combustion engine having a thrust bearing segment according to the first embodiment of the present invention, viewed from the left. FIG. 2 is a view taken along line II-II in FIG. 1. FIG. 3 is a view taken along line III-III in FIG. 1. FIG. 4 is a plan view of a thrust bearing segment (hereinbelow, a "thrust pad") according to the first embodiment. FIG. 5 is a side view of the thrust pad according to the first embodiment.

As shown in FIG. 1, an internal combustion engine 1 having thrust pads of the present invention is, for example, a large diesel engine (crosshead diesel engine) employed as the main engine of a ship, and it is connected to a propeller shaft (not shown) having a propeller (not shown) fixed at one end, via an intermediate shaft (not shown).
A crankshaft 2 that transmits the motive power of the internal combustion engine 1 to the propeller or the like is supported by a main bearing 4 and a thrust bearing 5, at a position behind a crank arm 3 located at the rearmost position (stern side).

The main bearing 4 includes a main bearing housing (bedplate saddle) 7, which is cast integrally with or welded to a bedplate 6 and accommodates the crankshaft 2, and a main bearing cap (main-bearing pressing metal member) 8.
The main bearing housing 7 includes a first housing 9 located on the front side (bow side) and a second housing 10 located on the rear side (stern side); a main-bearing lower metal member 12 that supports a journal 11 of the crankshaft 2 is fitted to the inner circumferential surface of the first housing 9, and a second main-bearing lower metal member 14 that supports a journal 13 of the crankshaft 2 is fitted to the inner circumferential surface of the second housing 10.

On the other hand, the main bearing cap 8 includes a first cap 15 fixed to the first housing 9 so as to cover the upper part of the bottom of the first housing 9 with a plurality of main-bearing cap bolts (not shown) standing (installed upright) on the first housing 9 and attaching nuts (not shown) that have female screws threaded onto male screws provided on the main-bearing cap bolts, and a second cap 16 fixed to the second housing 10 so as to cover the upper part of the bottom of the second housing 10 with a plurality of main-bearing cap bolts (not shown) standing (installed upright) on the second housing 10 and attaching nuts (not shown) that have female screws threaded onto male screws provided on the main-bearing cap bolts. A main-bearing upper metal member (not shown) that supports the journal 11 of the crankshaft 2 is fitted to the inner circumferential surface of the first cap 15, and a second main-bearing upper metal member (not shown) that supports the journal 13 of the crankshaft 2 is fitted to the inner circumferential surface of the second cap 16.

The thrust bearing 5 is accommodated in a recess 9a circumferentially formed in the inner circumferential portion of the first housing 9. Furthermore, the thrust bearing 5 includes a plurality of (five in the first embodiment) thrust pads 18 that support a front surface (an end surface on the bow side) 17a of a thrust collar (thrust cam) 17 circumferentially protruding radially outward in a ring-like shape from the outer circumferential surface of the crankshaft 2 located between the journal 11 and the journal 13, and thrust-pad pressing members 19 that limit (prevent) movement of the thrust pads 18 in the circumferential direction. Furthermore, the thrust bearing 5 includes a plurality of (five in the first embodiment) thrust pads 20 that are accommodated in a recess 10a circumferentially formed in the inner circumferential portion of the second housing 10 and that support a rear surface (an end surface on the stern side) 17b of the thrust collar 17, and thrust-pad pressing members 21 that limit (prevent) movement of the thrust pads 20 in the circumferential direction.

As shown in FIG. 2, the thrust pads 18 are circumferentially arranged such that adjacent side surfaces are in contact with each other, and the side surfaces of the thrust pads 18 at both ends, more specifically, the middle portions of the side surfaces not in contact with the side surfaces of the adjacent thrust pads 18, are in contact with tip end surfaces of the thrust-pad pressing members 19. Furthermore, base end portions of the thrust-pad pressing members 19, which have an L shape in plan view, are fixed to the main bearing housing 7 with fastening means (for example, a plurality of bolts 22).

On the other hand, as shown in FIG. 3, similarly to the thrust pads 18, the thrust pads 20 are circumferentially arranged such that adjacent side surfaces are in contact with each other, and the side surfaces of the thrust pads 20 at both ends, more specifically, the middle portions of the side surfaces not in contact with the side surfaces of the adjacent thrust pads 20, are in contact with tip end surfaces of the thrust-pad pressing members 21. Furthermore, base end portions of the thrust-pad pressing members 21, which have an L shape in plan view, are fixed to the main bearing housing 7 with fastening means (for example, a plurality of bolts 23).
Note that the reference numeral 24 in FIGS. 1 and 3 denotes a flywheel (flywheel).

Each of the thrust pads 18 and 20 according to the first embodiment has a plan-view shape as shown in FIG. 4 and a side-view shape (cross-sectional view) as shown in FIG. 5, and the outer circumferential edge located on the radially outer side is circumferentially provided with a circumferential groove 32 machined (recessed) from a circumferential surface (outer circumferential surface) 31 toward the radially inward side and having a U shape in side view (cross-sectional view).
The circumferential grooves 32 are formed so as to satisfy 0.05≤B/A≤0.45, where A is the length (in the radial direction) of the thrust pads 18 and 20, and B is the depth of the circumferential grooves 32.

In the thrust pads 18 and 20 according to the first embodiment, because the provision of the circumferential grooves 32 makes the outer circumferential edges of the thrust pads 18 and 20 flexible, the stress concentrated on the outer circumferential edges of the thrust pads 18 and 20 can be reduced (distributed along the length direction (radial direction) of the thrust pads 18 and 20), the maximum surface pressure applied to each of the thrust pads 18 and 20 can be reduced, and hence, the load-bearing ability of the thrust bearing 5 can be improved.
Note that the reason why the stress is concentrated on the outer circumferential edges of the thrust pads 18 and 20 is that the main bearing housing 7 is joined to the bedplate 6 at the end farther from the crankshaft 2 (the lower end (lower portion) in FIG. 1), and the rigidity of the main bearing housing 7 supporting the thrust pads 18 and 20 increases as the distance from the crankshaft 2 increases.

Furthermore, in the thrust pads 18 and 20 according to the first embodiment, the recess does not need to be uniformly machined radially inward from the circumferential surface (outer circumferential surface) located on the radially outer side of the thrust collar 17 so that the cross-sectional shape thereof is uniform, as in the conventional type (the invention disclosed in PTL 1). Thus, even in large marine diesel engines, the manufacturing processes of crankshafts and engines do not take a long time, and the engine manufacturing cost can be reduced.

### (Second Embodiment)

Thrust pads according to a second embodiment of the present invention will be described with reference to FIGS. 6 and 7. FIG. 6 is a plan view of a thrust pad according to the second embodiment, and FIG. 7 is a side view of the thrust pad according to the second embodiment.
Thrust pads 41 according to the second embodiment differ from those according to the above-described first embodiment in that they have a step portion 42, instead of the circumferential grooves 32. Because the other structural elements are the same as those according to the above-described first embodiment, descriptions thereof will be omitted here.

The thrust pads 41 according to the second embodiment have a plan-view shape as shown in FIG. 6 and have a side-view shape (cross-sectional view) as shown in FIG. 7. The outer circumferential edge of each thrust pad 41 located on the radially outer side is circumferentially provided with the step portion 42 extending radially inward from a circumferential surface (outer circumferential surface) 43, which is machined (recessed) from a non-pressure-receiving surface 45 (or a non-sliding surface, which is the surface opposite to the surface facing the front surface 17a or the rear surface 17b of the thrust collar 17 (see FIG. 1), i.e., a pressure-receiving surface or a sliding surface 44) toward the pressure-receiving surface 44 and has an L shape (rectangular shape) in side view (cross-sectional view).
The step portion 42 is formed so as to satisfy 0.05≤B/A≤0.35 and 0.01≤C/T≤0.4, where A is the length (in the radial direction) of the thrust pad 41, B is the depth of the step portion 42, C is the width of the step portion 42, and T is the thickness of the thrust pad 41.

In the thrust pad 41 according to the second embodiment, because the provision of the step portion 42 makes the outer circumferential edge of the thrust pad 41 flexible, the stress concentrated on the outer circumferential edge of the thrust pad 41 can be reduced (distributed along the length direction (radial direction) of the thrust pad 41). Accordingly, the maximum surface pressure applied to the thrust pad 41 is reduced, improving the load-bearing ability of the thrust bearing 5.
Note that the reason why the stress is concentrated on the outer circumferential edge of the thrust pad 41 is that the main bearing housing 7 is joined to the bedplate 6 at the end farther from the crankshaft 2 (the lower end (lower portion) in FIG. 1), and the rigidity of the main bearing housing 7 supporting the thrust pad 41 increases as the distance from the crankshaft 2 increases.

Furthermore, in the thrust pads 41 according to the second embodiment, the recess does not need to be uniformly machined radially inward from the circumferential surface (outer circumferential surface) located on the radially outer side of the thrust collar 17 so that the cross-sectional shape thereof is uniform, as in the conventional type (the invention disclosed in PTL 1). Thus, even in large marine diesel engines, the manufacturing processes of crankshafts and engines do not take a long time, and the engine manufacturing cost can be reduced.

### (Third Embodiment)

Thrust pads according to a third embodiment of the present invention will be described with reference to FIGS. 8 and 9. FIG. 8 is a plan view of a thrust pad according to the third embodiment, and FIG. 9 is a side view of the thrust pad according to the third embodiment.
Thrust pads 51 according to the third embodiment differ from those according to the above-described first embodiment in that they have a circumferential groove 52 instead of the circumferential grooves 32. Because the other structural elements are the same as those according to the above-described first embodiment, descriptions thereof will be omitted here.

The thrust pads 51 according to the third embodiment have a plan-view shape as shown in FIG. 8 and have a side-view shape (cross-sectional view) as shown in FIG. 9. The inner circumferential edge of each thrust pad 51 located on the radially inner side is circumferentially provided with a circumferential groove 52 machined (recessed) from the circumferential surface (inner circumferential surface) 53 toward the radially outer side and has a U shape in side view (cross-sectional view).
The circumferential groove 52 is formed so as to satisfy 0.1≤B/A≤0.5, where A is the length (in the radial direction) of the thrust pad 51, and B is the depth of the circumferential groove 52.

In the thrust pad 51 according to the third embodiment, because the provision of the circumferential groove 52 makes the inner circumferential edge of the thrust pad 51 flexible, the load point on the main bearing housing 7 can be moved toward the outer circumferential edge of the thrust pad 51 (radially outward). Accordingly, the maximum surface pressure applied to the thrust pad 51 is reduced, improving the load-bearing ability of the thrust bearing 5.
Note that the reason why the maximum surface pressure applied to each thrust pad 51 can be reduced by moving the load point on the main bearing housing 7 toward the outer circumferential edge of the thrust pad 51 is that, because the main bearing housing 7 is joined to the bedplate 6 at the end farther from the crankshaft 2 (the lower end (lower portion) in FIG. 1), by moving the load point on the main bearing housing 7 toward the outer circumferential edge of the thrust pad 51, the thrust pad 51 is supported by the main bearing housing 7 on the farther side from the crankshaft 2, which has a higher rigidity, reducing the displacement (inclination) of the main bearing housing 7.

Furthermore, in the thrust pads 51 according to the third embodiment, the recess does not need to be uniformly machined radially inward from the circumferential surface (outer circumferential surface) located on the radially outer side of the thrust collar 17 so that the cross-sectional shape thereof is uniform, as in the conventional type (the invention disclosed in PTL 1). Thus, even in large marine diesel engines, the manufacturing processes of crankshafts and engines do not take a long time, and the engine manufacturing cost can be reduced.

### (Fourth Embodiment)

Thrust pads according to a fourth embodiment of the present invention will be described with reference to FIGS. 10 and 11. FIG. 10 is a plan view of a thrust pad according to the fourth embodiment, and FIG. 11 is a side view of the thrust pad according to the fourth embodiment.
Thrust pads 61 according to the fourth embodiment differ from those according to the above-described first embodiment in that they have a step portion 62, instead of the circumferential grooves 32. Because the other structural elements are the same as those according to the above-described first embodiment, descriptions thereof will be omitted here.

The thrust pads 61 according to the fourth embodiment have a plan-view shape as shown in FIG. 10 and have a side-view shape (cross-sectional view) as shown in FIG. 11. The inner circumferential edge of each thrust pad 61 located on the radially inner side is circumferentially provided with the step portion 62 extending radially outward from a circumferential surface (inner circumferential surface) 63, which is machined (recessed) from the non-pressure-receiving surface 45 (or the non-sliding surface, which is the surface opposite to the surface facing the front surface 17a or the rear surface 17b of the thrust collar 17 (see FIG. 1), i.e., the pressure-receiving surface or the sliding surface 44) toward the pressure-receiving surface 44 and has an L shape (rectangular shape) in side view (cross-sectional view).
The step portion 62 is formed so as to satisfy 0.15≤B/A≤0.35 and 0.1≤C/T≤0.4, where A is the length (in the radial direction) of the thrust pad 61, B is the depth of the step portion 62, C is the width of the step portion 62, and T is the thickness of the thrust pad 61.

In the thrust pad 61 according to the fourth embodiment, because the provision of the step portion 62 makes the inner circumferential edge of the thrust pad 61 flexible, the load point on the main bearing housing 7 can be moved toward the outer circumferential edge (radially outer side) of the thrust pad 61. Accordingly, the maximum surface pressure applied to the thrust pad 61 is reduced, improving the load-bearing ability of the thrust bearing 5.
Note that the reason why the maximum surface pressure applied to each thrust pad 61 can be reduced by moving the load point on the main bearing housing 7 toward the outer circumferential edge of the thrust pad 61 is that, because the main bearing housing 7 is joined to the bedplate 6 at the end farther from the crankshaft 2 (the lower end (lower portion) in FIG. 1), by moving the load point on the main bearing housing 7 toward the outer circumferential edge of the thrust pad 61, the thrust pad 61 is supported by the main bearing housing 7 on the farther side from the crankshaft 2, which has a higher rigidity, reducing the displacement (inclination) of the main bearing housing 7.

Furthermore, in the thrust pads 61 according to the fourth embodiment, the recess does not need to be uniformly machined radially inward from the circumferential surface (outer circumferential surface) located on the radially outer side of the thrust collar 17 so that the cross-sectional shape thereof is uniform, as in the conventional type (the invention disclosed in PTL 1). Thus, even in large marine diesel engines, the manufacturing processes of crankshafts and engines do not take a long time, and the engine manufacturing cost can be reduced.

Because the thrust bearing 5 having the thrust pads according to the embodiments of the present invention achieves an improved load-bearing ability even when the size of the thrust pads is the same as that of the conventional thrust pads, it can be applied to a large internal combustion engine (for example, a diesel engine) having a larger output than a conventional internal combustion engine, without increasing the size.
On the other hand, when subjected to the same load as before, the thrust pads may have a smaller size than the conventional thrust pads. Thus, the size and weight of the thrust bearing 5 can be reduced.

In the internal combustion engine 1 according to the embodiments of the present invention, when subjected to the same load as before, the thrust pads may have a smaller size than the conventional thrust pads. Thus, the sizes and weights of the main bearing housing 7 and the bedplate 6 can be reduced.

Note that the present invention is not limited to the above-described embodiments, and it can be variously changed or modified within a scope not departing from the spirit of the present invention.
For example, the present invention may be embodied by combining the above-described first embodiment and the third embodiment or the fourth embodiment, or may be embodied by combining the above-described second embodiment and the third embodiment or the fourth embodiment.

Furthermore, the cross-sectional shape of the circumferential grooves 32 and 52 is not limited to a U shape, and the cross-sectional shape of the step portions 42 and 62 is not limited to an L shape; any shape that achieves the same advantage may be employed.

### {Reference Signs List}

1: large diesel engine (internal combustion engine)
2: crankshaft
5: thrust bearing
17: thrust collar
18: thrust pad (thrust bearing segment)
20: thrust pad (thrust bearing segment)
32: circumferential groove
41: thrust pad (thrust bearing segment)
42: step portion
44: pressure-receiving surface
45: non-pressure-receiving surface
51: thrust pad (thrust bearing segment)
52: circumferential groove
61: thrust pad (thrust bearing segment)
62: step portion

## Claims

1. A thrust bearing segment that supports a thrust collar while resisting a load in a rotation axis direction acting on the thrust collar provided on a crankshaft,
wherein the thrust bearing segment has a recess circumferentially provided in at least one of an outer circumferential edge having an outer circumferential surface facing radially outward with respect to the rotation axis and an inner circumferential edge having an inner circumferential surface facing radially inward with respect to the rotation axis.

2. The thrust bearing segment according to Claim 1, wherein the recess is provided in the outer circumferential edge, and the recess is a circumferential groove having a U-shaped cross section in the radial direction.

3. The thrust bearing segment according to Claim 1, wherein the recess is provided in the outer circumferential edge, and the recess is a step portion provided on a surface not in contact with the thrust collar and having an L-shaped cross section in the radial direction.

4. The thrust bearing segment according to Claim 2 or 3, wherein the recess is provided in the inner circumferential edge, and the recess is a circumferential groove having a U-shaped cross section in the radial direction.

5. The thrust bearing segment according to Claim 2 or 3, wherein the recess is provided in the inner circumferential edge, and the recess is a step portion provided on a surface not in contact with the thrust collar and having an L-shaped cross section in the radial direction.

6. The thrust bearing segment according to Claim 1, wherein the recess is provided in the inner circumferential edge, and the recess is a circumferential groove having a U-shaped cross section in the radial direction.

7. The thrust bearing segment according to Claim 1, wherein the recess is provided in the inner circumferential edge, and the recess is a step portion provided on a surface not in contact with the thrust collar and having an L-shaped cross section in the radial direction.

8. A thrust bearing comprising the thrust bearing segment according to any one of Claims 1 to 7.

9. An internal combustion engine comprising the thrust bearing according to Claim 8.
